# EUROPEAN PATENT APPLICATION

(11) **EP 2 645 449 A1**
(43) Date of publication of application: **02.10.2013**
(21) Application number: 13156513.7
(22) Date of filing: 25.02.2013
(51) Int. Cl.: H01M 2/10, H01M 2/34, H01M 10/0525, H01M 2/02

(54) **Battery module and battery system using the same**

(30) Priority: 26.03.2012 JP 2012068581
(71) Applicant: Hitachi Ltd., Tokyo 100-8280 (JP)
(72) Inventor: HONDA, Mitsutoshi, Tokyo, 100-8220 (JP); AOYAMA, Hiroshi, Tokyo, 100-8220 (JP); KOHNO, Ryuji, Tokyo, 100-8220 (JP)
(74) Representative: MERH-IP Matias Erny Reichl Hoffmann

(57) **Abstract**

A battery module (300) according to the present invention has: a battery cell group comprised with multiple laminated lithium ion battery cells (313) being laminated; a case (302) for housing the battery cell group; and a connection member (303); in which the case is comprised of a first case part (302a) and a second case part (302b) with the first case part and the second case part mutually connected sandwiching the battery cell group, in which a first fixed part (304a) is provided in the first case part and a second fixed part (304b) is provided in the second fixed part, in which the connection member is fixed to the first fixed part and the second fixed part, and in which the battery module has a detection circuit for, when the connection member is ruptured, blocking the electric connection of the battery cell group.

## Description

### Technical Field

The present invention relates to a battery module that uses a laminated lithium ion battery, and a battery system using it.

### Background

The battery system is used for accumulation of electricity of electric power generated using a natural energy, a backup power supply of a facility, etc. Although conventionally, such a large-sized battery system was built with a lead storage battery, development of the large-sized battery system that uses the lithium-ion secondary battery for the battery system is progressing from a demand of making it space-saving and a demand of making it lead free in recent years.

There are various kinds of forms, such as a coiled type and a laminated cell type, in this lithium-ion secondary battery. For example, the laminated cell type lithium-ion battery is comprised of a layered product formed with positive and negative electrode plates laminated alternately, a cell film for housing this layered product, an electrolyte filled in the cell film, etc. serving as a battery cell of one unit. Generally, these multiple battery cells are combined and housed in a module case, and will be used as a battery module.

While this laminated lithium ion battery is suitable for a long-term use because heat dissipation is excellent, if excessive charging is performed, there will be a possibility that the layered product in its interior may expand depending on a charging state, which will cause cell expansion. Moreover, when an internal temperature of the battery cell rises, an electrolyte evaporates and thereby internal pressure increases, and there is also a possibility that the cell may also expand in this case. If the cell expands abnormally, there will be a risk that the cell will cleave and the electrolyte will leak, which will result in an ignition phenomenon. Therefore, it is generally understood that it is necessary to detect abnormalities of the battery cell as described above and configure it to be able to take a measure against it in advance.

As means to detect such abnormalities of the battery cell, Japanese Unexamined Patent Application Publication No. 2011-198511 discloses an invention in which a sensor is provided between the battery cell and the module case, and when it is determined that the battery cell expands by a fixed amount or more by information from the sensor, bursting of the battery cell is prevented by blocking the cell from an external circuit.

### Summary

However, although the invention described in Japanese Unexamined Patent Application Publication No. 2011-198511 can measure expansion of the cell with a sensor, there is a problem that due to an error of the sensor and a variation in a state of the cell, anomalous expansion of the cell cannot be detected surely. Moreover, since the cell becomes large with capacity enlargement of the cell in recent years, there also arises a problem that a measurement position of the sensor and a position of a cell indicating dangerous expansion become different.

In view of the above-mentioned problem, objects of the present invention are to provide a lithium-ion battery module that is made capable of detecting anomalous expansion of a battery cell surely even when there is the variation in the state of the battery cell, and to provide a battery system using this.

In order to solve the above-mentioned problem, the battery module according to the present invention is characterized by having a battery cell group comprised of multiple laminated lithium ion battery cells being laminated, a case for housing the battery cell group, and a connection member, in which the case includes a first case part and a second case part, in which the first case part and the second case part is mutually connected with the battery cell group sandwiched there between, in which the first case part is provided with a first fixed part, and the second case part is provided with a second fixed part, in which the connection part is fixed to the first fixed part and the second fixed part, and in which the battery module has a detection circuit for, when the connection part is ruptured, blocking the electric connection of the battery cell group.

According to the present invention, even when there is the variation in the state of the battery cell, it becomes possible to provide the lithium-ion battery module that is made capable of detecting the anomalous expansion of the battery cell surely, and to provide the battery system using this.

### Brief Description of the Drawings

Fig. 1 is an exploded perspective view of a battery module.
Fig. 2 is a perspective view of the battery module.
Fig. 3 is a diagram showing details of a connection member 303a according to a first embodiment.
Fig. 4 is a diagram showing details of a laminated battery cell aggregate.
Fig. 5 is a cross-section taken along the line A-A of the battery module described in Fig. 2, and a diagram showing peripheral circuits of the battery module.
Fig. 6 is a diagram showing details of a connection member 303b according to a second embodiment.
Fig. 7 is a diagram showing details of a clasp 344 according to a third embodiment.
Fig. 8 is a diagram showing details of a connection member 303c according to the third embodiment.
Fig. 9 is a diagram of a battery module according to the third embodiment and a diagram showing a peripheral circuit of the battery module.
Fig. 10 is a diagram of a battery module according to a fourth embodiment and a diagram showing a peripheral circuit of the battery module.
Fig. 11 is a diagram of a battery module according to a fifth embodiment and a diagram showing a peripheral circuit of the battery module.
Fig. 12 is a diagram of a battery module according to a sixth embodiment and a diagram showing a peripheral circuit of the battery module.
Fig. 13 is a diagram showing a battery system according to a seventh embodiment.

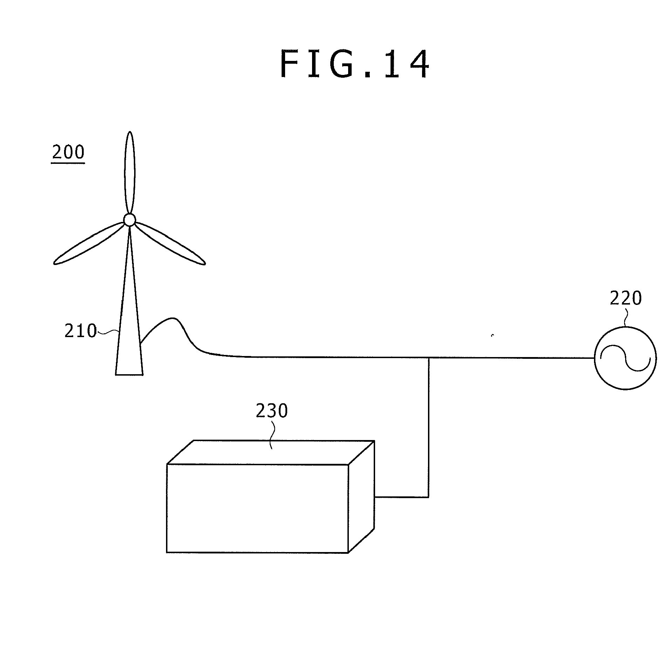

Fig. 14 is a diagram showing a wind turbine generator system according to an eighth embodiment.

### Detailed Description

### First Embodiment

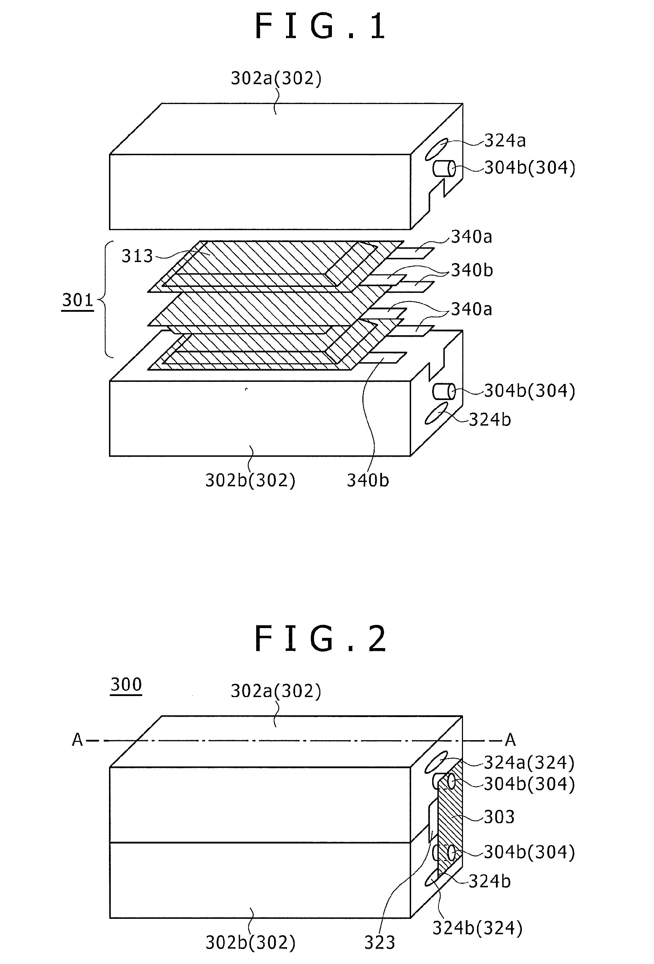

Hereafter, embodiments of the present invention will be described using drawings. First, a battery module 300 according to the present invention will be explained using Fig. 1 and Fig. 2. Fig. 1 is an exploded perspective view of the battery module 300 according to the present invention. The battery module 300 has a case 302, a laminated battery aggregate 301 housed in the case 302, and output terminals 324 for outputting electric power from the laminated battery aggregate 301. The case 302 is comprised of a case upper cover 302a and a case lower cover 302b, and the case upper cover 302a and the case lower cover 302b are arranged so as to sandwich laminated battery cells 313 forming the laminated battery aggregate 301 from the lamination direction thereof as shown in Fig. 1, being closely adhered to the laminated battery aggregate 301. These case upper cover 302a and case lower cover 302b have clasps 304 (304a, 304b) for fixing a connection member 303 that becomes a feature of the present invention on one plane, respectively.

Furthermore, on a plane on which the clasp 304a of the case upper cover 302a is provided, a cathode side output terminal 324a is provided, and on a plane on which the clasp 304b of the case upper cover 302b is provided, an anode side output terminal 324b is provided. The cathode side electrode 340a of the laminated battery cell 313 is connected to this cathode side output terminal 324a through wiring or a connector; the anode side electrode 340b of the laminated battery cell 313 is connected to the anode side output terminal 324b through the wiring or the connector. Moreover, an opening 323 is formed in the case 302 and therefore the case has a structure that easily releases a gas that is generated when the laminated battery cells 313 expand.

Fig. 2 shows a perspective view of the battery module 300 in which the connection member 303 is connected to the clasps 304a, 304b. The clasps 304a and 304b are arranged being aligned mutually in a cell lamination direction so that the connection member 303 may rupture according to the expansion in the cell lamination direction. Furthermore, the cathode side output terminal 324a and the anode side output terminal 324b are arranged at positions at which they sandwich the clasps 304a and 304b from the lamination direction of the laminated battery cells 313. Arranging them in such a way makes it possible to break surely a connection between the cathode side output terminal 324a and the cathode side electrode 340a, or a connection between the anode side output terminal 324b and the anode side electrode 340b by expansion of the cells even if there is a failure that switching devices 305, 315 are not opened when the connection member 303 suffers rupture or the like. Therefore, since it becomes possible to break a connection with an other charging/discharging device that will be described later, the expansion of the cell can be stopped.

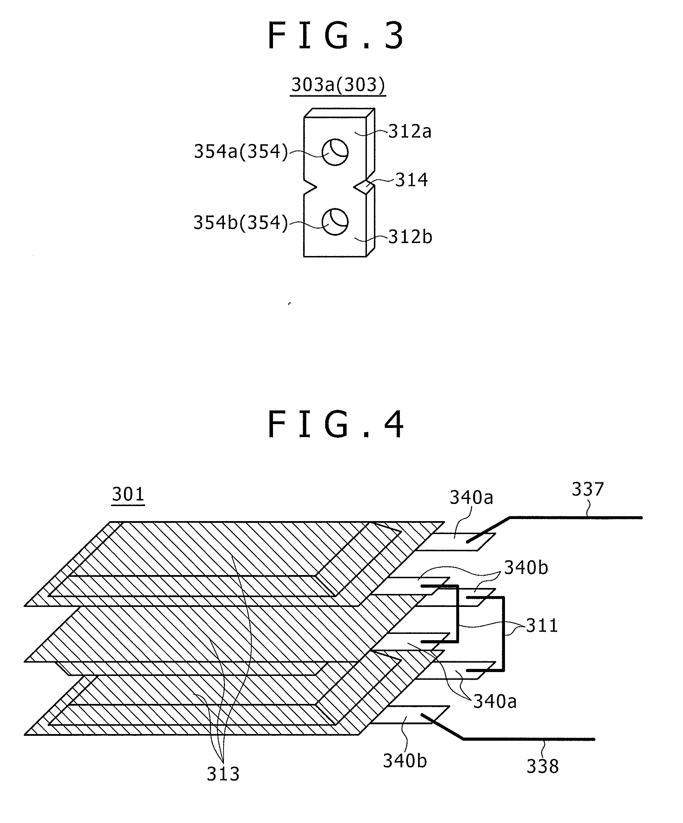

Then, a shape of the connection member 303 will be explained using Fig. 3. In this embodiment, what has a shape of a connection member 303a is used as the connection member. The connection member 303a has wide sections 312a, 312b (312) and a narrow section 314. The wide sections 312a, 312b have clasp connecting holes 354a, 354b (354) for connecting themselves with the clasps 304a and 304b, at which the clasps 304a and 304b are fixed being fitted to the clasp connecting holes 354a and 354b, respectively.

Moreover, the narrow section 314 is formed between the wide section 312a and the wide section 312b. This narrow section 314 has a width that allows the connection member 303a to be ruptured when a stress of a predetermined value or mode is applied thereto due to the expansion of the cell. For example, if the width of the wide section is set to 10 mm and the width of the narrow section 314 is set to a width of about 20% to the wide section 312, it will be ruptured by a stress occurring at an initial stage of the expansion, and it becomes possible for the cell to be ruptured even when the cell is in an early stage of the expansion. By making the connection member 303 have such a configuration, it becomes possible to detect the abnormalities of the cells surely using an expansion detection circuit 316 describer later.

Incidentally, metals, especially copper, aluminum, etc. are used as a material of this connection member 303a. Moreover, a material that is hard to be ruptured at the time of the expansion may be used for the wide section 312, and a metal that is easy to be ruptured at the time of the expansion may be used for the narrow section 314. If configuring the connection member 303a in this way, it will become possible to make the connection member 303a rupture by a change in the early stage of the cell expansion, and reliability will improve.

Next, a specific connection of the aggregate 301 of the laminated batteries will be explained using Fig. 4. The aggregate 301 of the laminated batteries is comprised of a plurality of laminated battery cells 313 being laminated to one another Incidentally, here it is assumed that the number of the laminated battery cells 313 is three in order to simplify the explanation, but it is needless to say that there is no restriction in particular on the number of the cells.

In this embodiment, the laminated battery cells 313 are arranged so that their cathode side electrodes 340a and anode side electrodes 340b may be placed alternately, respectively. By layering the laminated battery cells 313 in this way, it becomes possible to manufacture the battery module by simply connecting splicing fittings 311 longwise as illustrated when connecting the laminated battery cells in series. Incidentally, regarding the connections between this splicing fitting 311 and the cathode side electrode 340a and between the splicing fitting 311 and the anode side electrode 340b, any connecting means could be used, such as connection by caulking and welding. Moreover, regarding how to layer the laminated battery cells, it goes without saying that it is not necessarily required that the cathode side electrode 340a and the anode side electrode 340b be arranged interleavingly, respectively.

The cathode side electrode 340a at the end of the laminated battery cells that are connected in series is connected to the above-described cathode side output terminal 324a through connection wiring 337, and the anode side electrode 340b at the end of the laminated battery cells that are connected in series is connected to the above-described anode side output terminal 324b through connection wiring 338. Incidentally, regarding lengths of these connection wiring 337, 338, it is desirable that the length should be set to a length whereby the connection between the connection wiring and the output terminal 324 can be cut off surely when the cell expands by a predetermined amount or more. As one example, it is recommendable that it should have a length such that the connection wiring 337, 338 are cut off surely when the aggregate of the laminated batteries expands by 10%.

Adopting such a configuration makes it possible to break surely the connection between the cathode side output terminal 324a and the cathode side electrode 340a or the connection between the anode side output terminal 324b and the anode side electrode 340b by the expansion of the cells even when there is the failure that the switching device is not opened when the connection member 303 is ruptured, or the like.

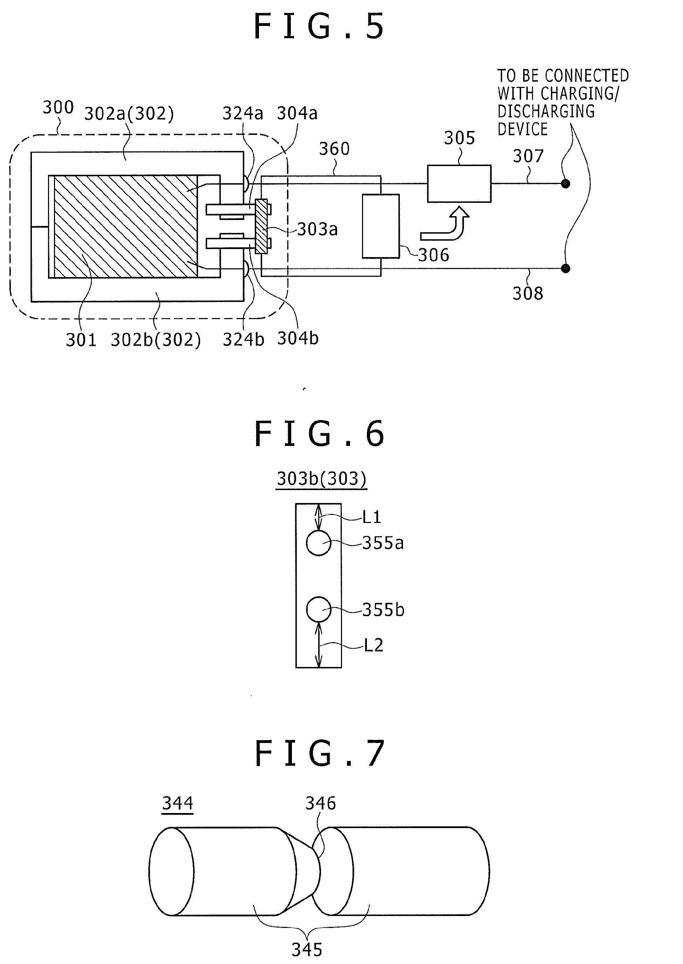

Fig. 5 shows a further other circuit configuration by cutting off the battery module 300 of Fig. 2 along an A-A section. The cathode output terminal 324a provided in the battery module 300 is electrically connected with the other charging/discharging device through a cathode side connection cable 307. Moreover, similarly, the anode output terminal 324b provided in the battery module 300 is also connected with the other charging/discharging device through an anode side connection cable 308.

Moreover, a switching device 305 is provided between the cathode output terminal 324a and the other device. This switching device 305 may be a mechanical switch, or may be a switching device like IGBT. Moreover, in this embodiment, although the switching device 305 is connected to the cathode output terminal 324a side, but may be connected to the anode output terminal 324b side. Incidentally, the switching device 305 is controlled by an expansion detection circuit 306 described later.

Then, the expansion detection circuit 306 will be explained. This expansion detection circuit 306 is connected with the connection member 303 through a detection line 360 to form a closed circuit. The expansion detection circuit 306 passes a minute current through this closed circuit from the expansion detection circuit 306, and in addition an unillustrated current detection circuit is checking whether the current flowing in this closed circuit is blocked. If the current is not flowing, the expansion detection circuit 306 will determine that the connection member 303 has ruptured by the expansion of the cells and the closed circuit has become in an open circuit state, and will control so that the switching device 305 may become in an open state. Since by doing in this way it becomes possible to cut off the connection between the battery module 300 and the other charging/discharging device surely even when the cell expands, the battery module 300 is no longer charged by the other charging/discharging device, which makes it possible to stop the expansion of the cell. Incidentally, regarding a determination as to whether the connection member 303 is ruptured or not ruptured, defining a predetermined current value, a case where the current value changes from it by a predetermined amount or more may be determined as a rupture.

Checking as to whether the current flowing in the closed circuit is not blocked can also be done by measuring a voltage across the both ends of the connection member 303. For example, the expansion detection circuit 306 may be configured to, when the voltage across the both ends of the connection member 303 becomes abnormally high, determine that the connection member 303 has ruptured by the expansion of the cell and the closed circuit has become in the open circuit state, and to control the switching device 305 so that it may become in the open state.

Incidentally, the expansion detection circuit 306 may be provided in every battery module 300, or may be formed inside a module controller 130 described later. In the case where the expansion detection circuit 306 is provided in every battery module 300, there is an advantage that a time required until blocking becomes earlier by an amount that there is no intervention of the module controller 130. On the other hand, in the case where the expansion detection circuit 306 is built in the module controller 130, the necessity of providing the expansion detection circuit 306 for every battery module 300 is eliminated, and therefore the safety as a whole battery system can be raised without increasing the number of parts.

As described above, since the laminated battery cells 313 are closely adhered to the case 302 in the present invention, even when there is a variation in a state of the battery cell, the laminated battery cells 313 can deliver a change of its expansion to the case 302 directly. Therefore, a change of the expansion is also transmitted to the clasp 304 provided in the case 302, the above-described configuration can make a bonding member 303 rupture surely, and the detection of the expansion of the cell becomes attainable. Moreover, since when the expansion of the cell is detected, connection of the battery module 300 with the other charging/discharging device can be cut off; therefore, the expansion of the battery cell caused by electric power flowing from the other device can be suppressed.

### Second Embodiment

A connection member according to a second embodiment is shown in Fig. 6. In the second embodiment, a point that is different from the first embodiment is a shape of the connection member 303. Although a connection member 303b of this embodiment does not have the narrow section 314 and the width of the wide section 303b is constant, positions at which the clasp connecting holes 355a, 355b (355) are provided differ from the first embodiment. In this embodiment, a distance L1 of the clasp connecting hole 355a to the end of the connection member 303b is made shorter than a distance L2 of the clasp connecting hole 355b to the end of the connection member 303b. By configuring the connection member 303b in this way, it becomes possible to, when the cell expands by a predetermined amount or more, make the connection member 303b rupture surely even without treating the connection member 303 with a special processing.

Therefore, by adopting the configuration of this embodiment, it becomes possible to provide a battery module capable of detecting the expansion of the cell surely while making its manufacture easy.

### Third Embodiment

The battery module according to a third embodiment will be explained using Fig. 7, Fig. 8, and Fig. 9. Incidentally, for the same component as that of the first embodiment, the same number as the drawing number used in the first embodiment is used. In the third embodiment, a point that is largely different from the first embodiment is a structure of clasps 344a, 344b (344). A concrete structure of the clasp 344 is shown in Fig. 7. In this embodiment, it is a point that thick sections 345 and a thin section 346 are provided in the clasp 344. The clasp 344 takes a shape in which the thick sections 345 are arranged at the both ends of the thin section 346.

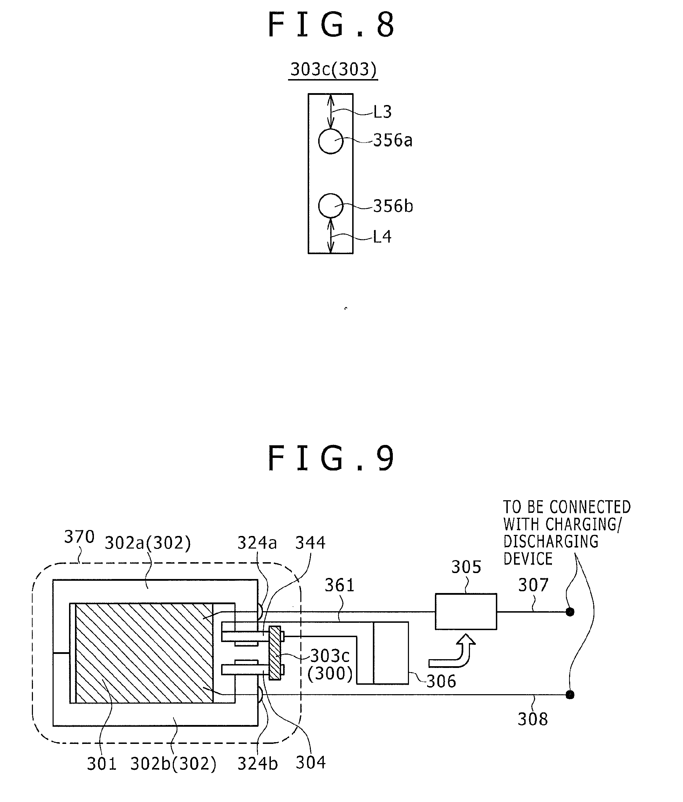

A configuration of a battery module 370 using this clasp 344 is shown in Fig. 9. In connection with using the clasp 344, a configuration of a detection line 361 has been substituted for that in the first embodiment. In this embodiment, the detection line 361 is connected to the both ends of the clasp 344a of the first embodiment. Since the necessity of passing the current through a connection member 303c is eliminated by adopting such a configuration, it also becomes possible to use a material other than metals for the connection member 303c.

Furthermore, in this embodiment, in order to make it possible to cut off the clasp 344 more surely, the clasp 344 is used only for one out of the two clamps that has a connection with the detection line 361, and the clamp 304 identical to that in the first embodiment is used for the other side clamp. By adopting such a configuration, it becomes possible to, when the cell expands, make the clasp 344 rupture more surely. Therefore, it becomes possible to detect the expansion of the battery cell surely.

Incidentally, the connection member 303c used in this embodiment is shown in Fig. 8. In this embodiment, since it is necessary to make the clasp 344 rupture surely, the connection member needs to be given a structure that is resistant to rupture. Accordingly, in this embodiment, a distance L3 between the clasp connecting hole 356a and the end of the connection member 303c and a distance L4 between the clasp connecting hole 356b and the end of the connection member 303c are made to be substantially identical. In the case where the connection member 303c is given this configuration and the clamp 304 and the clamp 344 are connected to the one side thereof and the other side thereof, respectively, it becomes possible to make the clasp 344 rupture surely. Incidentally, if a material that is easy to rupture is used for the material of the clasp 344, the clasp 344 can be made to rupture more surely, and the reliability of expansion detection of the battery cell will improve.

Incidentally, although in the first to the third embodiments described above, the connection member 303 as shown in Fig. 3, Fig. 6, and Fig. 8 was used as a member, a strain sensor may be provided in the connection member 303, and if a spring is used instead of the connection member 303, it will be possible to attain the same effect.

### Fourth embodiment

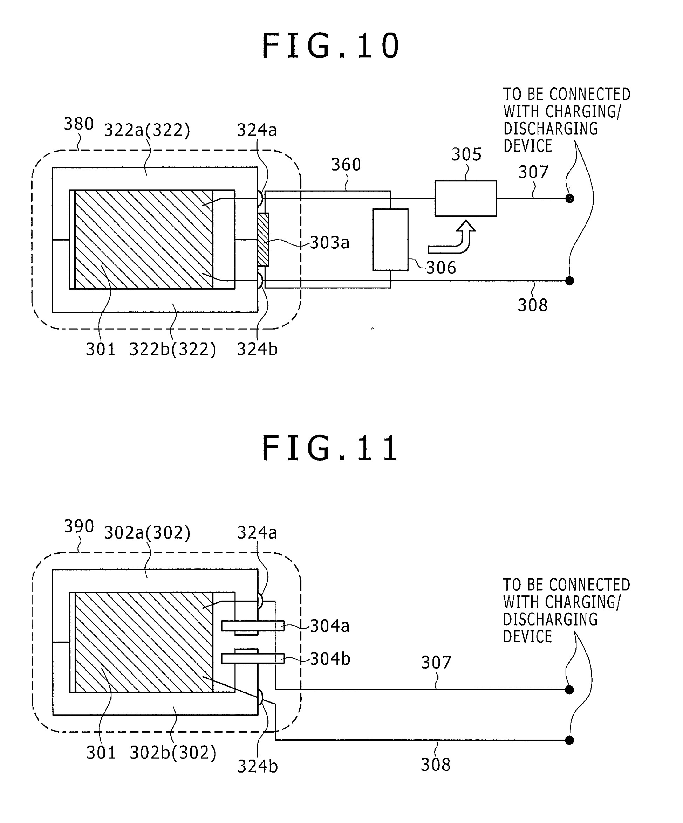

A battery module 380 according to a fourth embodiment is shown in Fig. 10. Incidentally, for the same component as that of the first embodiment, the same number as the drawing number used in the first embodiment is used. In the fourth embodiment, a point that is different from the first embodiment is that the case does not have an opening, and is configured that the connection member 303a is directly connected to the case.

A case 322 is comprised of a case upper cover 322a and a case lower cover 322b like the case 302 of the first embodiment. The connection member 303a is arranged so as to straddle the case upper cover 322a and the case lower cover 322b of the case 322, and the case 322 and the connection member 303a are directly connected with each other. Since it becomes possible to transmit an influence of the expansion of the cell directly to the connection member by adopting such a configuration, it becomes possible to detect the expansion of the cell surely even in the early stage of the expansion. Moreover, providing the clasp 304 becomes unnecessary and productivity also improves.

### Fifth Embodiment

A battery module 390 according to a fifth embodiment is shown in Fig. 11. Incidentally, for the same component as that of the first embodiment, the same number as the drawing number used in the first embodiment is used. In the fifth embodiment, a point that is different from the first embodiment is a point of not using the connection member 303.

In this embodiment, the cathode side connection cable 307 is made to pass through the clasps 304a and 304b, and further the cathode side connection cable 307 is fixed to the clasps 304a and 304b. By adopting such a configuration, it becomes possible to break the connection between the other charging/discharging device and the battery module 390 when the cell expands, even in the case where there is neither the expansion detection circuit 306 nor the switching device 305.

Therefore, it becomes possible to separate the battery module 380 from the circuit surely at the time of the cell expansion while the number of parts is reduced, and the reliability improves. Moreover, it becomes unnecessary to provide the clasps 304 and the productivity also improves.

Incidentally, although the cathode side connection cable 307 is made to pass through the clasps 304a and 304b to be fixed in this embodiment, it is also good to adopt a configuration where the anode side connection cable 308 is made to pass through the clasps 304a and 304b to be fixed.

### Sixth embodiment

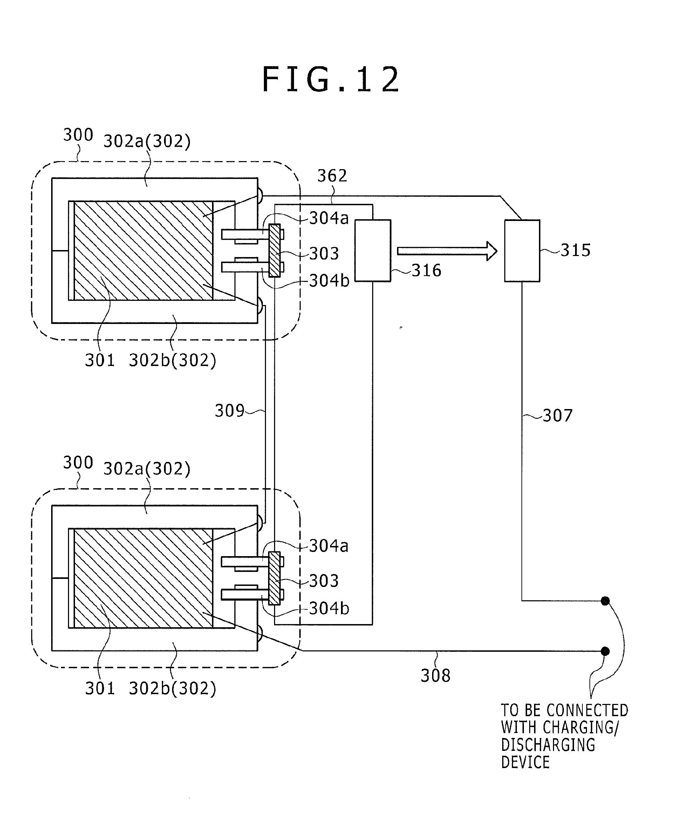

A battery module 300 according to a sixth embodiment is shown in Fig. 12. Incidentally, for the same component as that of the first embodiment, the same number as the drawing number used in the first embodiment is used. In the sixth embodiment, a point that is different from the first embodiment is a point of performing the expansion detection of the multiple battery modules 300 with one common expansion detection circuit.

In this embodiment, the battery module has a configuration in which the multiple battery modules 300 are connected in series, and the switching device 315 is provided on the cathode side of the battery module 300 that is the highest potential side. A detection line 362 is connected to the connection members 303 of the two battery modules 300 to form a closed circuit, and the one expansion detection circuit 316 is provided in the closed circuit.

The expansion detection circuit 316 passes a minute current through this closed circuit from the expansion detection circuit 316. Moreover, the expansion detection circuit 316 is checking whether a current flowing in this closed circuit is blocked with an unillustrated current detecting circuit. When the current is not flowing, the expansion detection circuit 316 determines that the connection member 303 has ruptured by the expansion of the cell and the closed circuit has become in the open circuit state, and controls the switching device 315 so that it may become in the open state. Since by configuring it in this way, it becomes possible to cut off the connection between the battery module 300 and the other charging/discharging device surely even when the cell expands, the battery module 300 will be no longer charged by the other charging/discharging device, and therefore it becomes possible to stop the expansion of the cell.

Moreover, checking as to whether the current flowing in the closed circuit is not blocked can be done by measuring the voltage across the both ends of the connection member 303 in the two battery module 300. For example, when the voltage across the both ends of the connection member 303 becomes abnormally high, the expansion detection circuit 316 determines that the connection member 303 has ruptured by the expansion of the cell and the closed circuit has become in the open circuit state, and controls the switching device 315 so that it may become in the open state.

Incidentally, in this embodiment, the case where two battery modules 300 were connected in series was explained, but it goes without saying that even in the case where the two or more battery modules 300 are connected, the one expansion detection circuit 316 can support the multiple battery modules 300.

By configuring the battery module in this way, even in the case where multiple battery modules are connected in series, when any one of the battery modules expands, a connection between a series-connected body of the battery modules 300 and the charging/discharging device can be broken; therefore, it becomes possible to prevent the expansion of the battery modules 300 surely.

### Seventh embodiment

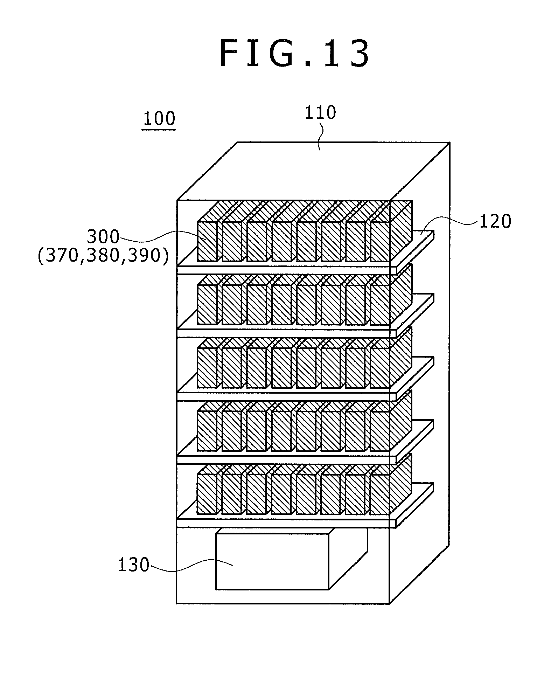

A battery system 100 according to a seventh embodiment is shown in Fig. 13. This embodiment is one battery pack 100 that is formed by combining the battery modules 300 (370, 380, and 390) of the first embodiment to the sixth embodiment.

The battery pack 100 according to the present invention is shown in Fig. 13. The battery pack 100 has the multiple battery modules 300 (370, 380, and 390), a module mounting base 120 that mounts the battery module 300 (370, 380, and 390) thereon, and the module controller 130 for collecting cell information (current, voltage, temperature, a state of charging (SOC)) of the multiple battery modules. Incidentally, the module controller 130 is also performing a control of the switching devices 305, 315 described above. Moreover, in the case where the expansion detection circuits 306, 316 are provided in this module controller 130, when the expansion is detected in any one of the battery modules 300 (370, 380, and 390), the module controller 130 performs opening of the switching devices 305, 315. These battery modules 300 (370, 380, and 390), the battery module mounting base 120, and the module controller 130 are housed in a rack 110 to constitute the battery pack 100.

Since the multiple battery modules 300 (370, 380, and 390) makes it easy to deform the multiple battery modules 300 (370, 380, and 390) by being arranged with gaps given to one another as illustrated, it becomes possible to detect the expansion of the battery modules 300 (370, 380, and 390) surely even in the early stage of the expansion. Incidentally, when the multiple battery modules 300 (370, 380, and 390) and arranged being adhered closely to one another, deformation of the battery modules 300 (370, 380, and 390) is suppressed slightly by adjoining battery modules 300 (370, 380, and 390). However, the heat dissipation of the multiple battery modules 300 (370, 380, and 390) improves by as much amount as it is closely adhered to the adjoining battery modules 300 (370, 380, and 390), and it becomes possible to suppress the expansion of the cell caused by heat generation in advance.

### Eighth Embodiment

A battery system 100 according to an eighth embodiment is shown in Fig. 13. This embodiment is such that a battery block 230 is formed by using the multiple battery packs 100 of the seventh embodiment. A wind turbine generator system 200 has a wind turbine generator 210, an alternating current system output 220, and the battery block 230. The battery block 230 is comprised of multiple battery packs connected to one another in series or in parallel, and is configured so that when a generated electric power is excessive to an electric power required by the alternating current system output, the battery block 230 charges an excessive power to absorb it, and when the generated electric power is smaller than the electric power required by the alternating current system output conversely, the battery block 230 discharges the electric power charged therein.

Note that this embodiment is just one example in the case where the battery block 230 is established as an annex to a power generating system, it can be used in the solar power generation etc. in addition to wind power generation. Moreover, the battery block 230 is also usable as an uninterruptible power supply, not being limited for the power generating system.

As described above, the use of the present invention enables the battery module to detect the expansion of the cell surely and to block the connection between the battery module and the other charging/discharging device, and makes it possible to provide a lithium-ion battery module that is made capable of detecting abnormal expansion of the battery cell surely even when there is the variation in the state of the battery cell, and a battery system using this.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A battery module (300), comprising:
a battery cell group in which a plurality of laminated lithium ion battery cells are laminated;
a case (302) for housing the battery cell group; and
a connection member (303);
wherein the case (302) is comprised of a first case part (302a) and a second case part (302b) with the first case part (302a) and the second case part (302b) mutually connected sandwiching the battery cell group,
wherein a first fixed part (304a) is provided in the first case part (302a) and a second fixed part (304b) is provided in the second case part (302b),
wherein the connection member is fixed to the first fixed part (304a) and the second fixed part (304b), and
wherein the battery module (300) comprises a detection circuit for, when the connection member (303) is ruptured, blocking the electric connection of the battery cell group.

2. The battery module according to claim 1,
wherein in the first case part (302a), a cathode side output terminal (324a) that is connected with a cathode side of the battery cell group is provided, and
wherein in the second case part (302b), an anode side output terminal (324b) that is connected with an anode side of the battery cell group is provided.

3. The battery module according to claim 2,
wherein a switching device (305) is connected to either one side of the cathode side output terminal (324a) or the anode side output terminal (324b), and
wherein when the connection member (303) is ruptured, the detection circuit makes the switching device (305) be in an off state.

4. The battery module according to at least one of claims 1 to 3,
wherein the first fixed part (304a) and the second fixed part (304b) are arranged so as to be aligned mutually in a lamination direction of the laminated lithium ion battery cell.

5. The battery module according to at least one of claims 2 to 4,
wherein the cathode side output terminal (324a) and the anode side output terminal (324b) are provided so as to be aligned mutually in a lamination direction of the laminated lithium ion battery cell, and further are provided so as to sandwich the first fixed part (304a) and the second fixed part (304b).

6. The battery module according to at least one of claims 1 to 5,
wherein the connection member (303) has wide sections and a narrow section, and the wide sections are provided at both ends of the narrow section.

7. A battery system (100) that has a plurality of battery modules (300) according to claim 1.
